# EUROPÄISCHE PATENTANMELDUNG

(11) **EP 1 467 132 A1**
(43) Veröffentlichungstag der Anmeldung: **13.10.2004**
(21) Anmeldenummer: 04005692.1
(22) Anmeldetag: 10.03.2004
(51) Int. Cl.: F16K 5/06, F16K 41/08, F16J 15/32

(54) **Kugelhahn**

(30) Priorität: 08.04.2003 DE 10315896
(71) Anmelder: Hydac Accessories GmbH, 66280 Sulzbach/Saar (DE)
(72) Erfinder: Käfer, Jürgen, 66578 Schiffweiler (DE); Michel, Bernd, 66578 Schiffweiler (DE)
(74) Vertreter: Patentanwälte Bartels und Partner

(57) **Zusammenfassung**

Die Erfindung betrifft einen Kugelhahn mit einer Schaltkugel (10) zum wahlweisen Sperren oder Freigeben eines fluidführenden Weges (12) innerhalb eines Ventilgehäuses (14), in dem die Schaltkugel (10) über ein Dichtsystem (22) drehbar geführt und mittels einer Schaltspindel (24) betätigbar ist, die das Ventilgehäuse (14) durchgreift, und die über ein weiteres Dichtsystem (30) gleichfalls drehbar im Ventilgehäuse (14) geführt ist. Dadurch, dass das weitere Dichtsystem (30) für die Schaltspindel (24) mindestens eine Lippendichtung (56,58) aufweist, die die Schaltspindel (24) umfaßt, wird die Spindelabdichtung nunmehr nicht mehr über konventionelle O-Dichtringe realisiert, sondern über ein Lippendichtringsystem, wobei die dahingehend eingesetzte Lippendichtung nur eine geringe Vorpressung benötigt, um sicher abdichten zu können, wobei die Dichtvorpressung bei Druck sich noch weiter erhöht.

## Beschreibung

Die Erfindung betrifft einen Kugelhahn mit einer Schaltkugel zum wahlweisen Sperren oder Freigeben eines fluidführenden Weges innerhalb eines Ventilgehäuses, in dem die Schaltkugel über ein Dichtsystem drehbar geführt und mittels einer Schaltspindel betätigbar ist, die das Ventilgehäuse durchgreift, und die über ein weiteres Dichtsystem gleichfalls drehbar im Ventilgehäuse geführt ist. Kugelhähne haben grundsätzlich einen weiten Anwendungsbereich und werden in fast allen Industriezweigen eingesetzt. Sie zeichnen sich durch eine kompakte Bauweise, leichte Schaltbarkeit, auch unter hohen Drücken, geringe Umschaltkräfte sowie in der Regel leicht auswechselbare Dichtungen aus. Sie sind geeignet für hohe, pulsierende Drücke und leckölfreie Abdichtungen.

Kugelhähne sind meist nach dem Prinzip der schwimmenden Kugel konstruiert, d.h. die Schaltkugel gleitet freitragend zwischen durch den Fluidstrom hohen Druckes vorgespannten Dichtungen eines Dichtsystems aus Kunststoff. Durch den Fluidstrom wird die Schaltkugel stets an die derart druckabgewandte Dichtung gedrückt, wodurch ein Anpreßdruck entsteht, der die Dauerdichtheit des Kugelhahns unterstützt. Die Schaltkugel selbst wird durch eine über ein weiteres Dichtsystem gleichfalls abgedichtete Schaltspindel betätigt, an deren aus dem Ventilgehäuse herausragendem Teil häufig ein Mehrkant angeordnet ist, der dem Angriff einer Betätigungseinrichtung dient, wobei diese aus einem Handhebel gebildet sein kann, aber auch aus einem Antriebsmotor, beispielsweise in Form eines pneumatischen Antriebes. Bei den bekannten Lösungen begrenzen ein Anschlagstift und eine Anschlagscheibe häufig die Schaltstellung des Kugelhahns im Ventilgehäuse.

Als Bauarten von Kugelhähnen kommen solche für Niederdruck- und solche für Hochdruckanwendungen in Frage, entweder in der Art einer Einweg- oder einer Mehrweg-Fluidführung, wobei der fluidführende Durchgang innerhalb des Ventilgehäuses bei einer Mehrweggestaltung über eine sog. L- oder T-Bohrung in der Schaltkugel realisiert ist.

Werden dahingehende Kugelhähne mit einer hohen Schaltfrequenz, jedoch mit niederen Einsatzdrücken verwendet, kommt es an dem Dichtsystem der Schaltspindelbetätigung, das regelmäßig aus O-Dichtringen mit Abstützringen aufgebaut ist, zu einem erhöhten Abrieb an den O-Dichtringen, so dass diese die mechanische Vorspannung verlieren und undicht werden. Selbst wenn man eine Vielzahl von O-Dichtringen in paketweiser Hintereinanderanordnung entlang der Schaltspindel plaziert, verlängert sich die Standzeit nur geringfügig, da der Verschleiß durch die Bewegung der Schaltspindel und die mechanische Vorspannung nach wie vor im wesentlichen bestimmt wird. Da das bekannte Dichtsystem mit O-Dichtringen für die Schaltspindel auch im Grunde als Teil der Lagerung für die Antriebsspindel anzusehen ist, ist diese auch insoweit entsprechend hoch belastet.

Aber auch bei der Kugelabdichtung selbst kommt es bei Standardkugelhähnen mit hoher Schaltfrequenz zu Problemen. Bei den bekannten Lösungen ist die Schaltkugel zwischen zwei Dichtschalen aufgenommen und bei hohen Drücken des Fluidstromes dichtet sich der Kugelhahn aufgrund der zwischen den Dichtschalen schwimmend gelagerten Schaltkugel selbst ab, so dass an sich hohe, den Verschleiß begünstigende Schaltfrequenzen für die Schaltkugel nicht schädlich sind. Treten jedoch noch zusätzlich niedrige Fluiddrücke auf, reduziert sich die beschriebene Selbstabdichtung für die Schaltkugel und die Dichtschalen werden aufgrund des Verschleißes, bedingt durch hohe Schaltfrequenzen, undicht.

Ausgehend von diesem Stand der Technik liegt der Erfindung die Aufgabe zugrunde, unter Beibehalten der Vorteile, die bekannten Kugelhahnkonstruktionen dergestalt weiter zu verbessern, dass insbesondere auch bei hohen Schaltfrequenzen der Schaltkugel und niedrigen Fluiddrücken die Dichtheit des Kugelhahnes gewährleistet ist. Des weiteren soll die dahingehende Lösung kostengünstig in der Herstellung und auch in der Wartung montagefreundlich sein. Eine dahingehende Aufgabe löst ein Kugelhahn mit den Merkmalen des Patentanspruches 1 in seiner Gesamtheit.

Dadurch, dass gemäß dem kennzeichnenden Teil des Patentanspruches 1 das weitere Dichtsystem für die Schaltspindel mindestens eine Lippendichtung aufweist, die die Schaltspindel umfaßt, wird die Spindelabdichtung nunmehr nicht mehr über konventionelle O-Dichtringe realisiert, sondern über ein Lippendichtringsystem, wobei die dahingehend eingesetzte Lippendichtung nur eine geringe Vorpressung benötigt, um sicher abdichten zu können, wobei die Dichtvorpressung bei Druck sich noch weiter erhöht. Da die jeweilige Lippendichtung trotz geringen Vorpreßdruckes bereits eine hohe Dichtwirkung erreicht, ist der Verschleiß dieser Dichtung ausgesprochen gering und die geforderte Lebensdauer wird auch bei sehr hohen Schaltfrequenzen an der Schaltspindel erreicht. Dergestalt läßt sich der Kugelhahn dann auch in Meerwasser-Entsalzungsanlagen zum Einsatz bringen, wo für den Kugelhahn sehr hohe Schalt- und Betätigungsfrequenzen gefordert sind.

Bei einer bevorzugten Ausführungsform des erfindungsgemäßen Kugelhahnes ist darüber hinaus vorgesehen, dass die Schaltspindel an ihrem der Schaltkugel abgewandten Ende in einem axial abstützenden Rollenlager drehbar geführt ist. Aufgrund des genannten Rollenlagers braucht das Dichtsystem der Schaltspindel nicht wie bei den bekannten Lösungen mit den O-Dichtringen in axialer Richtung den Verschleiß des Dichtsystems erhöhende Abstützkräfte aufbauen, sondern diese werden bei der erfindungsgemäßen Lösung im wesentlichen durch das Rollenlager kompensiert. Auch hat sich das dahingehend axial abstützende Rollenlager als besonders geeignet erwiesen, sofern die wesentlichen Ventilteile aus Edelstahl bestehen; ein Erfordernis, wie es sich aus dem Betrieb des Kugelhahnes bei Meerwasser-Entsalzungsanlagen ergibt, bei denen das hoch korrosiv wirkende Salzwasser als Fluid durch den Kugelhahn geleitet werden muß.

Bei einer weiteren bevorzugten Ausführungsform des erfindungsgemäßen Kugelhahnes weist das Dichtsystem der Schaltkugel mindestens zwei Dichtschalen auf, von denen mindestens eine mittels eines Energiespeichers, insbesondere in Form eines Federspeichers, gegen die Schaltkugel in jeder ihrer Schaltstellungen gedrückt ist. Aufgrund der Selbstdichtwirkung des Kugelhahnes zwischen den beiden Dichtschalen über die schwimmend angeordnete Schaltkugel wird im Falle des Verschleißes der Dichtschalen bedingt durch die hohe Schaltfrequenz jedenfalls mindestens eine der Dichtschalen über den Energiespeicher der Schaltkugel nachgeführt und an diese gedrückt, so dass selbst bei niedrigen Fluiddrücken und hohem Verschleiß die Dichtwirkung an der Schaltkugel in vollem Umfang erhalten bleibt.

Weitere vorteilhafte Ausführungsformen sind Gegenstand der sonstigen Unteransprüche.

Im folgenden wird der erfindungsgemäße Kugelhahn anhand eines Ausführungsbeispiels nach der Zeichnung näher erläutert. Dabei zeigen in prinzipieller und nicht maßstäblicher Darstellung die
- Fig.1: einen Längsschnitt durch einen Kugelhahn, wie er im Stand der Technik bekannt ist;
- Fig.2: einen teilweise der Fig. 1 entsprechenden Längsschnitt durch den erfindungsgemäßen Kugelhahn.

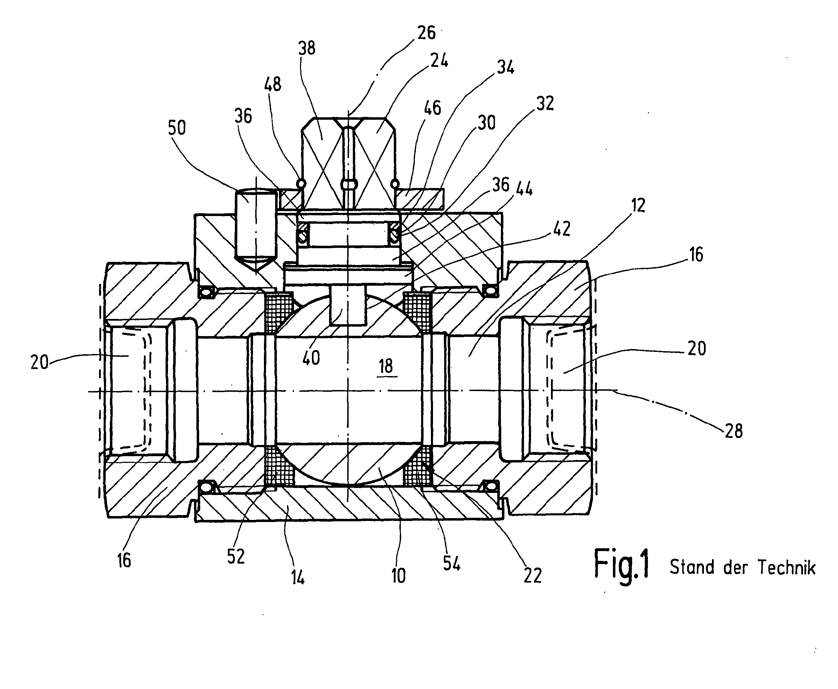

De Kugelhahn, wie er im Stand der Technik nach der Fig.1 bekannt ist, weist eine Schaltkugel 10 auf zum wahlweisen Sperren oder Freigeben eines fluidführenden Weges 12 innerhalb eines Ventilgehäuses 14. In Blickrichtung auf die Fig.1 gesehen sind rechts und links von dem zentralen Ventilgehäuse 14 in der Art von Einschraubteilen zwei Anschlußstücke 16 vorhanden, die der Zu- und der Abfuhr des Fluidstromes dienen, wobei die beiden Anschlußstücke 16 über innen liegende Verschraubungsstrecken an fluidführende Rohrleitungen eines Gesamt-Fluidsystems anschließbar sind, beispielsweise in Form einer hydraulisch arbeitenden Bearbeitungsmaschine, aber auch an Fluidanlagen jedweder Art, beispielsweise in Form einer Meeres-Entsalzungsanlage (nicht dargestellt).

Des weiteren ist in der Fig.1 die Schaltkugel 10 in ihrer den fluidführenden Weg 12 freigebenden Schaltstellung gezeigt, bei der ein Durchlaßkanal 18 der Schaltkugel 10 in fluidführender Deckung ist mit den Kanalteilen 20 der beiden Anschlußstücke 16. Die Schaltkugel 10 ist in dem Ventilgehäuse 14 über ein erstes Dichtsystem 22 drehbar geführt und hierfür mittels einer Schaltspindel 24 betätigbar. Diese Schaltspindel 24 steht mit ihrer Längsachse 26 senkrecht auf dem fluidführenden Weg 12 mit seiner Längsachse 28. Die dahingehende Schaltspindel 24 ist über ein weiteres Dichtsystem 30, bestehend aus einem O-Dichtring 32 aus einem Elastomerwerkstoff und einem Abstützring 34 aus Kunststoffmaterial, gleichfalls drehbar im Ventilgehäuse 14 geführt. Das dahingehende weitere Dichtsystem 30 erstreckt sich hierbei zwischen zwei flanschartigen Verbreiterungen 36 der Schaltspindel 24.

In Blickrichtung auf die Fig.1 gesehen weist die Schaltspindel 24 an ihrem oberen Ende einen Vierkant 38 auf, der dem Angriff eines Betätigungswerkzeuges, beispielsweise in Form eines Handhebels (nicht dargestellt) dient. Am gegenüberliegenden Ende verjüngt sich die Schaltspindel 24 in einen Eingriffssteg 40, der formschlüssig in einen Eingriffsschlitz 42 der Schaltkugel 10 mündet. Zwischen Eingriffssteg 40 und der unteren Flanschverbreiterung 36 ist an der Schaltspindel 24 eine im Durchmesser verbreiterte Stufe 44 angeordnet, die das Ventilgehäuse 14 an dieser Stelle untergreift und derart die Schaltspindel 24 in der einen axialen Richtung gegen ungewolltes Verschieben sichert. Auf der gegenüberliegenden Seite ist als Sicherung gegen axiales Verschieben eine Anlagescheibe 46 angebracht, die über einen Sprengring 48 in ihrer Lage gegenüber dem Vierkant 38 der Schaltspindel 24 gesichert ist. Die dahingehende Anlagescheibe 46 wirkt mit einem Anschlagstift 50 zusammen, der den Schwenkweg der Schaltspindel 24 begrenzt und dergestalt eine sinnfällige Betätigung der Schaltkugel 10 von ihrer in der Fig.1 gezeigten freigebenden Stellung in eine sperrende Stellung (nicht dargestellt) ermöglicht.

Die Schaltkugel 10 gleitet betätigt durch die Schaltspindel 24 freitragend zwischen zwei Dichtschalen 52,54 und je nach Durchströmungsrichtung wird die Schaltkugel 10 mit ihrem Außenumfang verstärkt an die eine Dichtschale 52 oder an die andere Dichtschale 54 mit ihrer zuordenbaren Anlagefläche gepreßt. Kommt es demgemäß an den Dichtschalen 52,54 zu einem erhöhten Verschleiß durch eine Vielzahl von Schaltbewegungen an der Schaltspindel 24, gleicht die Schaltkugel 10 dies aus, indem sie durch den Fluiddruck aufgrund ihrer schwimmenden Anordnung entsprechend dichtend nachgestellt unter dem Anpreßdruck des Fluids nach wie vor gegen die zugeordnete Dichtschale 52 oder 54 gepreßt wird. Die dahingehende Nachjustierung erfordert jedoch sehr hohe Fluiddrücke, so dass es bei einer Niederdruckanwendung dann zu entsprechenden Leckagestellen im Bereich zwischen den Dichtschalen 52,54 und der Außenumfangsseite der Schaltkugel 10 kommt. Auch ist diese bekannte Anordnung nach der Fig.1 für sehr hohe Schaltfrequenzen an der Schaltspindel 24 nicht geeignet, da dies nach kürzester Zeit zu einem Versagen am weiteren Dichtsystem 30 führt, das im übrigen zumindest teilweise auch eine Art Lagerstelle für die Schaltspindel 24 ausbildet.

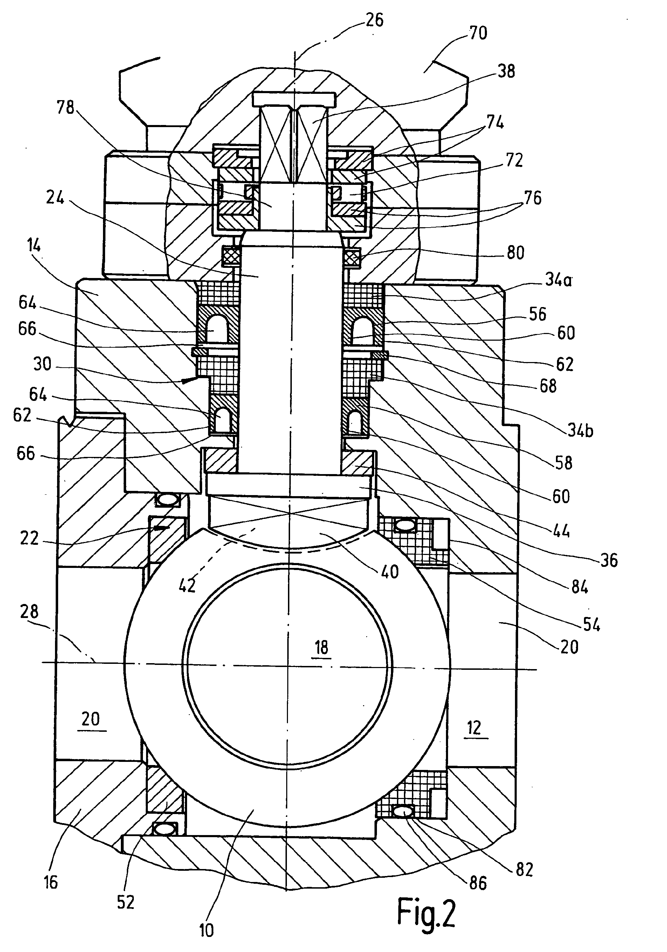

Ausgehend von diesem Stand der Technik nach der Fig.1 wird nachfolgend die erfindungsgemäße Kugelhahn - Lösung anhand der Fig.2 näher erläutert, wobei diejenigen Bauteile, die von ihrer Funktion her den Bauteilen im Stand der Technik nach der Fig.1 entsprechen, mit denselben Bezugszeichen wiedergegeben sind. Demgemäß wird die erfindungsgemäße Kugelhahn - Lösung nur noch insoweit erläutert, als sie sich wesentlich von der Lösung im Stand der Technik nach der Fig.1 unterscheidet.

Der erfindungsgemäße Kugelhahn nach der Fig.2 ist besonders geeignet bei Anwendungsfällen mit hoher Schaltfrequenz für die Antriebsspindel 24 und die Schaltkugel 10 sowie für relativ niedere Drücke (maximal 100 bar) bezogen auf den fluidführenden Weg 12 innerhalb des Ventilgehäuses 14.

Die erfindungsgemäße Kugelhahn - Lösung ist dadurch charakterisiert, dass das weitere Dichtsystem 30 für die Schaltspindel 24 aus zwei Lippendichtungen 56,58 gebildet ist, die jeweils ringförmig die Schaltspindel 24 außenumfangsseitig umfassen. Lippendichtungen werden in der Regel mit innerem und äußerem Unter- bzw. Übermaß hergestellt, wodurch sich die erforderliche Vorspannung beim Einbau ergibt. Demgemäß stützt sich die innenumfangsseitige Lippe 60 einer jeden Lippendichtung 56,58 am Außenumfang der Schaltspindel 24 ab und die außenumfangsseitige Lippe 62 an der Innenseite des Ventilgehäuses 14. Demgemäß verläuft eine Nut 64 der jeweiligen Lippendichtung 56,58 zwischen den beiden Lippen 60,62 der Dichtung und weist mit ihrer Nutöffnung in Richtung der Schaltkugel 10.

Die jeweilige Lippendichtung 56,58 ist mit einem vorgebbaren axialen Bewegungsspiel 66 innerhalb einer Dichtkammer 68 im Ventilgehäuse 14 angeordnet, wobei die jeweilige Lippendichtung 56,58 sich auf ihrer, der Ringnutöffnung abgewandten Seite an einem Abstützring 34a,b, insbesondere aus einem Kunststoffmaterial gebildet, abstützt. Bezogen auf die Längsachse 26 der Schaltspindel 24 sind in koaxialer Übereinanderanordnung die beiden Lippendichtungen 56,58 angeordnet, von denen der der Ventilkugel 10 benachbart gegenüberliegende Lippendichtring 58 im Durchmesser kleiner gewählt ist als der darüberliegende Lippendichtring 56. Des weiteren sind die beiden Lippendichtungen 56,58 mit ihren zugeordneten Abstützringen 34a,b über ein Distanzmittel, insbesondere in Form eines in das Ventilgehäuse 14 eingreifenden Sicherungsringes 68, voneinander getrennt. Sofern man die Dicht- und Anpreßkräfte für die Lippen 60,62 einer jeden Lippendichtung 56,58 erhöhen möchte, kann bei einer nicht näher dargestellten Ausführungsform vorgesehen sein, in die jeweilige Ringnut 64 ein Federelement anzuordnen, das die jeweiligen Lippen 60,62 voneinander wegdrückt. Es hat sich in praktischen Versuchen gezeigt, dass mit den Lippendichtungen 56,58 des weiteren Dichtsystems 30 eine sehr gut abdichtende Spindeldichtung erreicht ist, die auch bei sehr hohen Schaltfrequenzen mit der Schaltspindel 24 über lange Zeit hinweg eine sichere Abdichtung des Kugelhahnes ermöglicht.

Auf der Oberseite des Ventilgehäuses 14 ist ein Pneumatikmotor 70 angeordnet, der in üblicher und daher nicht näher beschriebener Art und Weise über den Vierkant 38 die Drehbewegung der Schaltspindel 24 erlaubt, um dergestalt die Schaltkugel 10 aus einer den fluidführenden Weg 12 sperrenden in eine freigebende Stellung und umgekehrt zu bewegen. Dabei ist die Schaltspindel 24 an ihrem oberen freien Ende in einem axial abstützenden Rollenlager 72 drehbar geführt, wobei die Teile der oberen Lagerschale 74 in das Gehäuse des Preß- oder Druckluftmotors 70 fest eingepreßt sind, wohingegen die weitere untere Lagerschale 76 mit ihren Komponenten an einer absatzweisen Verjüngung 78 der Schaltspindel 24 angeordnet ist. Zwischen den unteren Lagerschalenteilen 76 und dem in Blickrichtung auf die Fig.2 gesehen oberen Abstützring 34a ist ein weiterer Dichtring 80 angeordnet, der im Querschnitt im wesentlichen rechteckförmig ist. Mit dem dahingehenden axial abstützenden Rollenlager 72 ist zum einen partiell eine Entlastung des weiteren Dichtsystems 30 mit den beiden Lippendichtungen 56,58 erreicht und insbesondere besteht die Möglichkeit, wesentliche Ventilbaugruppen in Edelstahl auszuführen und über das Rollenlager 72 ist erreicht, dass Edelstahl nicht auf Edelstahl reiben kann. Eine dahingehende Edelstahl - Ausbildung des Gesamtventils ist insbesondere dann wünschenswert, wenn dieses im Bereich von Meerwasser-Entsalzungsanlagen eingesetzt wird.

Wie sich des weiteren aus der Fig.2 ergibt, ist die Dichtschale 54 außenumfangsseitig mit einem O-Dichtring 82 versehen. Die Dichtschale 54 wird über einen Federspeicher 84, der sich in einer außenumfangsseitigen Nut zwischen der Innenseite des Ventilgehäuses 14 und der Dichtschale 54 erstreckt, in Richtung der Schaltkugel 10 gepreßt, die sich dann wiederum an der weiteren Dichtschale 52 in dichtender Weise abstützen kann. Der dahingehende Federspeicher 84 ist über eine übliche Federscheibe gebildet und unabhängig, in welcher Richtung das Fluid die Schaltkugel 10 längs des fluidführenden Weges 12 durchquert, ist über den Federspeicher 84 der notwendige dichtende Anpreßdruck der Schaltkugel 10 an den beiden Dichtschalen 52,54 erreicht. Kommt es nun aufgrund hoher Schaltfrequenz zu einem Verschleiß an den Dichtschalen 52,54, wird der dahingehende Verschleißweg über den Federspeicher 84 ausgeglichen, der die Dichtschalen 52,54 in Anlage an der Schaltkugel 10 hält, auch wenn der Fluiddruck niedrig ist. Des weiteren ist die Dichtschale 54 zum Ventilgehäuse 14 über einen O-Ring 86 abgedichtet, der sich in einer Außenumfangsnut der Dichtschale 54 erstreckt.

Mit dem beschriebenen, erfindungsgemäßen Aufbau des Kugelhahnes ist dieser also sowohl im Bereich der Schaltkugel 10 dicht ausgeführt als auch im Bereich der Schaltspindel 24, wobei die Leckagedichtheit in jedem Betriebszustand vorliegt, also auch bei sehr hohen Schaltfrequenzen für die Schaltkugel 10 sowie bei sehr niederen Fluiddrücken innerhalb des fluidführenden Weges 12 im Ventilgehäuse 14.

## Patentansprüche

1. Kugelhahn mit einer Schaltkugel (10) zum wahlweisen Sperren oder Freigeben eines fluidführenden Weges (12) innerhalb eines Ventilgehäuses (14), in dem die Schaltkugel (10) über ein Dichtsystem (22) drehbar geführt und mittels einer Schaltspindel (24) betätigbar ist, die das Ventilgehäuse (14) durchgreift, und die über ein weiteres Dichtsystem (30) gleichfalls drehbar im Ventilgehäuse (14) geführt ist, **dadurch gekennzeichnet, dass** das weitere Dichtsystem (30) für die Schaltspindel (24) mindestens eine Lippendichtung (56,58) aufweist, die die Schaltspindel (24) umfaßt.

2. Kugelhahn nach Anspruch 1, **dadurch gekennzeichnet, dass** die innenumfangsseitige Lippe (60) der jeweiligen Lippendichtung (56,58) sich an der Schaltspindel (24) und die außenumfangsseitige Lippe (62) am Ventilgehäuse (14) abstützt und dass eine Ringnut (64) der Lippendichtung (56,58) zwischen den beiden Lippen (60,62) der Dichtung verläuft und mit ihrer Nutöffnung in Richtung der Schaltkugel (10) weist.

3. Kugelhahn nach Anspruch 2, **dadurch gekennzeichnet, dass** die jeweilige Lippendichtung (56,58) mit einem axialen Bewegungsspiel (66) innerhalb einer Dichtkammer (68) im Ventilgehäuse (14) angeordnet ist und dass die jeweilige Lippendichtung (56,58) sich auf ihrer der Ringnutöffnung abgewandten Seite an einem Abstützring (34a,b), insbesondere aus Kunststoffmaterial, abstützt.

4. Kugelhahn nach einem der Ansprüche 1 bis 3, **dadurch gekennzeichnet, dass** bezogen auf die Längsachse (26) der Schaltspindel (24) in axialer Übereinanderanordnung zwei Lippendichtungen (56,58) angeordnet sind, von denen der der Ventilkugel (10) benachbart gegenüberliegende Lippendichtring (58) im Durchmesser kleiner gewählt ist als der darüberliegende Dichtring (56).

5. Kugelhahn nach Anspruch 3 oder 4, **dadurch gekennzeichnet, dass** die jeweiligen Lippendichtungen (56,58) mit ihren zugeordneten Abstützringen (34a,b) über ein Distanzmittel, insbesondere in Form eines in das Ventilgehäuse (14) eingreifenden Sicherungsringes (68), voneinander getrennt sind.

6. Kugelhahn nach einem der Ansprüche 3 bis 5, **dadurch gekennzeichnet, dass** innerhalb der Ringnut (64) einer Lippendichtung (56,58) ein Federelement anordenbar ist.

7. Kugelhahn nach einem der Ansprüche 1 bis 6, **dadurch gekennzeichnet, dass** die Schaltspindel an ihrem der Schaltkugel (10) abgewandten Ende in einem axial abstützenden Rollenlager (72) drehbar geführt ist.

8. Kugelhahn nach einem der Ansprüche 1 bis 7, **dadurch gekennzeichnet, dass** das Dichtsystem (22) der Schaltkugel (10) mindestens zwei Dichtschalen (52,54) aufweist, von denen mindestens eine (54) mittels eines Energiespeichers, insbesondere in Form eines Federspeichers (84), gegen die Schaltkugel (10) in jeder ihrer Schaltstellungen gedrückt ist.
